# EUROPEAN PATENT APPLICATION

(11) **EP 4 583 246 A1**
(43) Date of publication of application: **09.07.2025**
(21) Application number: 23860333.6
(22) Date of filing: 29.08.2023
(51) Int. Cl.: H01M 10/54, H01M 4/505, H01M 4/525

(54) **METHOD FOR PRODUCING ELECTRODE ACTIVE MATERIAL, METHOD FOR PRODUCING SECONDARY BATTERY, AND SECONDARY BATTERY**

(30) Priority: 01.09.2022 JP 2022138969
(71) Applicant: Maxell, Ltd., Kyoto 618-8525 (JP); Yamaguchi University, Yamaguchi 753-8511 (JP)
(72) Inventor: KISHIMI, Yuko, Otokuni-gun, Kyoto 618-8525 (JP); MATSUMOTO, Nobuaki, Otokuni-gun, Kyoto 618-8525 (JP); ABE, Koji, Ube-shi, Yamaguchi 755-8611 (JP); TODOROV, Yanko Marinov, Ube-shi, Yamaguchi 755-8611 (JP)
(74) Representative: Mewburn Ellis LLP
(86) International application number: PCT/JP2023/031190
(87) International publication number: WO 2024/048571

(57) **Abstract**

A method of manufacturing an electrode active material in an efficient manner is accomplished by recycling an exhausted active material contained in an electrode of a spent secondary battery through a simple process with reduced environmental impact such that the resulting active material can be reused. A method of manufacturing an electrode active material is a method of manufacturing an electrode active material by recycling an exhausted active material contained in an electrode of a spent secondary battery such that the resulting active material can be reused, the electrode including a current collector and an electrode mixture containing the active material and formed above the current collector, the method including: immersing the electrode in an alkali aqueous solution to peel the electrode mixture from the current collector (step 1); and neutralizing the peeled electrode mixture (step 2).

## Description

### TECHNICAL FIELD

The present invention relates to a method of manufacturing an electrode active material, a method of manufacturing a secondary battery, and a secondary battery, and, more particularly, to a method of manufacturing an electrode active material by recycling an exhausted active material contained in an electrode of a spent secondary battery such that the resulting active material can be reused, a method of manufacturing a secondary battery using such an electrode active material, and a secondary battery including such an electrode active material.

### BACKGROUND ART

It is a common practice to collect spent secondary batteries and, from their electrodes, recover exhausted battery materials such as active materials, which are then subjected to a recycling process for reuse.

JP 2010-34021 A describes a method of recovering oxide-containing battery materials from battery waste materials. This recovery method includes the step of immersing a substrate having oxide-containing battery materials adhering thereto in a solvent that essentially does not allow dissolution of oxides in order to peel the battery materials from the substrate, and the step of separating the peeled battery materials from the substrate. The solvents listed in the publication include N-methyl-2-pyrrolidone, water, dimethyl carbonate, diethyl carbonate, and chloroform. The publication also discloses baking the recovered oxides at a temperature not lower than 600 °C and not higher than 1100 °C.

Japanese Patent No. 5141970 describes a method of recovering a cathode active material from the positive electrode of a lithium battery. A lithium battery for which this recovery method can be used includes a cathode active material layer composed of a material containing a cathode active material, a conductive material and a binding material dispersed in a water-based solvent, the material being applied to the surface of a cathode current collector. This recovery method includes: the step of immersing the positive electrode in an alkali aqueous solution to peel the cathode active material layer from the cathode current collector; the step of adding an organic solvent to the peeled material of the cathode active material layer to extract the binding material from the peeled material; and the step of separating, from the extracted material after the extraction step, a supernatant containing the conductive material and a sediment containing the cathode active material.

### PRIOR ART DOCUMENTS

### PATENT DOCUMENTS

Patent Document 1: JP 2010-34021 A
Patent Document 2: Japanese Patent No. 5141970

### SUMMARY OF THE INVENTION

### PROBLEMS TO BE SOLVED BY THE INVENTION

Typically, an electrode for a secondary battery includes a current collector constructed of a metal foil, for example, and an electrode mixture formed upon the current collector. The electrode mixture contains an active material and, in addition, a conductive aid, a binder and other ingredients. Conventional known methods for separating a current collector and an electrode mixture include: (1) methods that mechanically scrape off the electrode mixture; (2) methods that use a polar solvent to dissolve the binder to peel the electrode mixture off the current collector; and (3) methods that apply impact with pulse waves to peel the electrode mixture off the current collector.

These methods suffer the following and other problems: According to the methods of category (1) above, the current collector is scratched, which may cause ingredients of the current collector to be mixed in the electrode mixture. The methods of category (2) above, when using a binder other than water-soluble resin, require a certain amount or more of organic polar solvent, which leads to increased environmental impact. The methods of category (3) above requires a batch-type process, which makes it impossible to process large amounts.

A problem to be solved by the present invention is to provide a method of manufacturing an electrode active material by recycling an exhausted active material contained in an electrode of a spent secondary battery such that the resulting active material can be reused, the method being capable of efficiently providing an electrode active material through a simple process with reduced environmental impact.

### MEANS FOR SOLVING THE PROBLEMS

A method of manufacturing an electrode active material according to one embodiment of the present invention is a method of manufacturing an electrode active material by recycling an exhausted active material contained in an electrode of a spent secondary battery such that the resulting active material can be reused, the electrode including a current collector and an electrode mixture formed above the current collector and containing the active material, the method including: immersing the electrode in an alkali aqueous solution to peel the electrode mixture from the current collector; and neutralizing the peeled electrode mixture.

A method of manufacturing a secondary battery according to one embodiment of the present invention includes: manufacturing an electrode using an electrode active material manufactured by the above-described method of manufacturing an electrode active material.

A secondary battery according to one embodiment of the present invention includes: an electrode containing an electrode active material manufactured by the above-described method of manufacturing an electrode active material.

### EFFECTS OF THE INVENTION

The present invention enables manufacturing an electrode active material in an efficient manner by recycling an exhausted active material contained in an electrode of a spent secondary battery such that the resulting active material can be reused, through a simple process with reduced environmental impact.

### BRIEF DESCRIPTION OF THE DRAWINGS

[FIG. 1] FIG. 1 is a flow chart of a method of manufacturing an electrode active material according to a first embodiment in embodiments of the present invention.
[FIG. 2] FIG. 2 is a flow chart of a method of manufacturing an electrode active material according to a second embodiment in the embodiments of the present invention.
[FIG. 3] FIG. 3 is a flow chart of a method of manufacturing an electrode active material according to a third embodiment in the embodiments of the present invention.
[FIG. 4] FIG. 4 shows charge/discharge curves of electrode sheets fabricated as examples during the first round of charge/discharge.
[FIG. 5] FIG. 5 shows discharge curves from measurements for a different discharge rate.
[FIG. 6] FIG. 6 shows charge/discharge curves of electrode sheets fabricated as examples during the first round of charge/discharge.
[FIG. 7] FIG. 7 is charge/discharge curves of the electrode sheets fabricated as examples during the second round of charge/discharge.

### EMBODIMENTS FOR CARRYING OUT THE INVENTION

The present inventors attempted to find a method of recovering, from an electrode of a spent lithium ion secondary battery, the exhausted active material, i.e., lithium composite oxide, and recycling it.

A conventional method for peeling the electrode mixture from the current collector involves dissolving the binder contained in the electrode mixture. Rather than dissolving the binder, the present inventors considered slightly dissolving the surface of the current collector to peel the electrode mixture from the current collector. They found that immersing the electrode in an alkali aqueous solution would enable efficient peeling of the electrode mixture from the current collector.

On the other hand, they also found that immersing the electrode mixture in an alkali aqueous solution would, even after a subsequent replacement with a neutral dispersion medium, increase the rate at which lithium flows out of the active material. A decrease in the amount of lithium in the active material changes the crystal structure such that, even if a recycling process is subsequently performed, the material may not be reusable as an electrode active material. To address this problem, the present inventors found that immersing the electrode mixture in an alkali aqueous solution and then neutralizing it would reduce the rate at which lithium flows out of the active material.

The present invention was made based on these findings. Now, an embodiment of the present invention will be described in detail with reference to the drawings.

### [Method of Manufacturing Electrode Active Material]

### [First Embodiment]

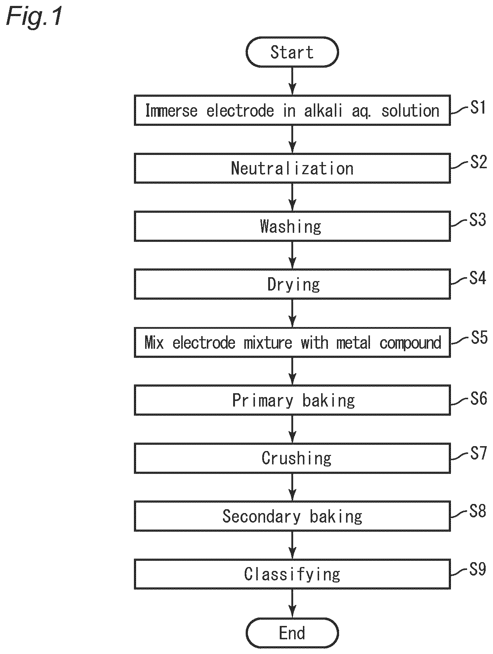

FIG. 1 is a flow chart of a method of manufacturing an electrode active material according to a first embodiment in embodiments of the present invention. The method of manufacturing an electrode active material according to the present embodiment includes: the step of immersing an electrode in an alkali aqueous solution to peel the electrode mixture from the current collector (step S1); the step of neutralizing the peeled electrode mixture (step S2); the step of washing the neutralized electrode mixture (step S3); the step of drying the washed electrode mixture (step S4); the step of mixing the electrode mixture with a metal compound into a mixed product (step S5); a primary baking step that bakes the mixed product at a temperature of 300 to 700 °C (step S6); a crushing step that crushes the mixed product after primary baking step (step S7); a secondary baking step that bakes the mixed product after the crushing step at a temperature not lower than the melting point of the metal compound and not higher than 1000 °C (step S8); and classifying particles of the mixed product after the secondary baking step (step S9).

A method of manufacturing an electrode active material according to the present embodiment is a method of manufacturing an electrode active material by recycling an exhausted active material contained in an electrode of a spent secondary battery such that the active material can be reused. Although not limiting, "spent secondary battery" means, for example, a secondary battery that has been repeatedly charged and discharged and has thus decreased its discharge capacity until it became unsuitable for reuse, and thus has been collected. Although not limiting, a secondary battery may be a lithium ion secondary battery, for example.

An electrode of a collected secondary battery includes a sheet-shaped current collector and an electrode mixture formed above the current collector. A current collector is typically made of a metal foil such as an aluminum foil or a copper foil, where an aluminum foil is particularly suitable. An electrode mixture is a mixed matter prepared by adding predetermined additives to an active material. An electrode of a secondary battery may be produced by, for example, dispersing an electrode mixture in a solvent to produce a paste, applying this to a current collector, and then removing the solvent through drying.

To list active materials usable for the present invention, specific examples of cathode active materials and anode active materials will be listed below.

Examples of cathode active materials include LiCoO₂ (LCO), LiCo_{1/3}Ni_{1/3}Mn_{1/3}O₂, LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.8}Co_{0.15}Al_{0.05}O₂ (NCA), and LiNi_{0.5}Mn_{1.5}O₄. In order to increase volumetric energy density, it is preferable to use a cathode active material containing a lithium composite oxide where, among the elements contained in element M in the composition represented by the general formula LiMO₂, the proportion of Ni in M in terms of atomic ratio is not less than 50 %; specifically, NCM523, NCM811, and NCA are suitable. To improve rapid charge/discharge, LiMn₂O₄ with a spinel-type structure and LiFePO₄ (LFP) with an olivine-type structure are suitable.

Suitable anode active materials include graphite materials such as natural graphite and artificial graphite, carbon materials such as hard carbon and soft carbon, as well as oxides such as lithium titanate, lithium manganate and SiO, and elements such as Si and Sn and alloys thereof.

A method of manufacturing an electrode active material according to the present embodiment may be used both to produce a cathode active material and to produce an anode active material. If a cathode active material is to be manufactured, a spent secondary battery is acquired and, from its positive electrode, the exhausted cathode active material is recovered and then subjected to a recycling process to produce a cathode active material that can be reused. If an anode active material is to be manufactured, a spent secondary battery is acquired and, from its negative electrode, the exhausted anode active material is recovered and then subjected to a recycling process to produce an anode active material that can be reused.

The method of manufacturing an electrode active material according to the present embodiment is particularly suitable when the active material to be recovered is an exhausted cathode active material. The method of manufacturing an electrode active material according to the present embodiment is suitable when the active material to be recovered is a compound containing an alkali metal, particularly a lithium composite oxide, and is even more suitable when the active material to be recovered is a composite oxide of lithium and a transition metal (Li*ₓ*MO₂; M represents transition metals, some of which may be replaced by typical elements), and particularly suitable when the active material to be recovered is a composite oxide of lithium, nickel, cobalt, and manganese.

In addition to the active materials, the electrode mixture may contain a binder and/or a conductive aid. Examples of binders include polyvinylidene fluoride (PVDF), polyvinylidene chloride (PVDC), polytetrafluoroethylene (PTFE), acrylic resins (such as acrylic acid-acrylate copolymers), carboxymethyl cellulose (CMC), and styrene-butadiene rubber (SBR). Examples of conductive aids include carbon black and graphite powder. The method of manufacturing an electrode active material according to the present embodiment may be used regardless of the type of binder or conductive aid.

First, a spent secondary battery is acquired and the electrodes are recovered therefrom, which are then immersed in an alkali aqueous solution to peel the electrode mixture from the current collector (step S1).

The alkali aqueous solution is an aqueous solution of a basic compound. Although not limiting, the basic compound may be a compound with an alkali metal, a compound with an alkaline earth metal, ammonia, or amine, for example. The alkali aqueous solution is preferably an aqueous solution of a compound with an alkali metal or an aqueous solution of a compound of an alkaline earth metal, and, to further facilitate peeling of the electrode mixture from the current collector, is particularly preferably an aqueous solution of sodium hydroxide or an aqueous solution of potassium hydroxide. To reduce the amount of waste of rare elements such as lithium, the alkali aqueous solution may be one that contains no lithium compound such as lithium hydroxide. If necessary, an aqueous solution may be used that has an organic solvent such as alcohol mixed therein.

If the pH of the alkali aqueous solution is too low, the electrode mixture may not be completely peeled from the current collector and some of the mixture may remain unpeeled; in view of this, the pH of the alkali aqueous solution is preferably not lower than 12.0, and more preferably not lower than 13.0. On the other hand, for an active material containing Mn, for example, if the pH of the alkali aqueous solution is too high, large amounts of metal will flow out of the active material such that, even if a recycling process is subsequently performed, the material may not be reusable as an electrode active material. Further, an excessive amount of current collector material will flow out such that the current collector cannot be recovered as a resource and, at the same time, ingredients of the current collector may be mixed in the electrode mixture. In view of this, the pH of the alkali aqueous solution is preferably not higher than 14.5, and more preferably not higher than 14.0.

The immersion time is preferably 1 to 10 minutes. If the immersion time is too short, the electrode mixture may not be completely peeled from the current collector and some mixture may remain unpeeled. On the other hand, if the immersion time is too long, large amounts of metal will flow out of the active material such that, even if a recycling process is subsequently performed, the material may not be reusable as an electrode active material. Further, an excessive amount of current collector material will flow out such that the current collector cannot be recovered as a resource and, at the same time, ingredients of the current collector may be mixed in the electrode mixture. The immersion time is more preferably not shorter than 2 minutes, and yet more preferably not shorter than 3 minutes. The immersion time is more preferably not longer than 8 minutes.

If an electrode mixture is left within a liquid, metal flows out of the active material. In view of this, it is preferable to immerse the electrode in the alkali aqueous solution for a certain period of time to peel the electrode mixture and then quickly remove the alkali aqueous solution. The alkali aqueous solution may be removed by decantation or filtering, for example.

Next, the peeled electrode mixture is neutralized (step S2). Specifically, for example, the electrode mixture is dispersed in a liquid such as water and stirred, and then further stirred while an acid is being added. The acid is not limited to any particular one; for example, sulfuric acid, hydrochloric acid, nitric acid or hydrofluoric acid may be used. In lieu of adding an acid after dispersion, the electrode mixture may be dispersed in a solution of a predetermined concentration of acid. In this step, it is preferable that the pH of the dispersion (i.e., solution with the electrode mixture dispersed therein) is not higher than 7.0. Further, it is preferable that the pH is kept to or below 7.0 for 1 minute or longer. However, if the active material to be recovered is an oxide, a pH that is too low may cause the active material to dissolve; in view of this, the pH of the dispersion is preferably higher than 2.0, for example, and more preferably higher than 3.0.

Neutralizing the electrode mixture reduces the rate at which metal flows out of the active material to be recovered. Still, in a liquid, metal gradually flows out of an the active material; in view of this, after neutralization of the electrode mixture, it is preferable to quickly remove the dispersion medium. The dispersion medium may be removed by decantation or filtering, for example.

Next, the neutralized electrode mixture is washed (step S3). Specifically, for example, the electrode mixture is dispersed in water and stirred before being filtered. In lieu of stirring, or in addition to stirring, ultrasonication may be performed. In lieu of filtering, decantation or centrifugation may be performed. Further, it is preferable to repeat these operations a plurality of times.

Further, the washed electrode mixture is dried (step S4). Although the drying is not limited to any particular conditions (temperature, atmosphere, time, etc.), it is preferable to ensure that the amount of water in the electrode mixture sufficiently decreases. Generally, the drying temperature may be lower than the processing temperature for the primary baking step discussed further below, e.g., lower than 300 °C.

After drying of the electrode mixture, a metal compound is added to the recovered electrode mixture and mixed together (step S5). The metal compound to be added to the electrode mixture is a compound containing a metal element contained in the recovered active material. For example, if the recovered active material is a lithium composite oxide, a metal compound represented by a compound of lithium, or more specifically, lithium carbonate or lithium hydroxide or a hydrate thereof, for example, is added to the electrode mixture and mixed together. A mixed matter obtained by mixing an electrode mixture and a metal compound will be hereinafter referred to as "mixed product".

Some of the metal elements in the active material are irreversibly consumed during the process of charge/discharge of the secondary battery. For example, if the cathode active material is a lithium composite oxide, some of the lithium is consumed for forming the SEI coating for the negative electrode, for example. As such, an exhausted active material contained in an electrode of a spent secondary battery has shortages of metal elements compared with an active material in its initial state. The metal elements in the exhausted active material further decrease as they flow out during the above-discussed step of immersion in an alkali aqueous solution (step S1) and washing step (step S3).

During recycling, a metal compound containing the metal elements of which there are shortages is added to return the composition of the active material to the appropriate state. The amounts for the metal compound to be added are preferably decided upon by measuring the amounts of the metal elements in the active material of the recovered electrode mixture and determining the amounts that will compensate for the shortages; alternatively, predetermined amounts may be added. The amounts of the metal elements in the electrode mixture may be measured by ICP emission spectroscopy, for example. Although not limiting, the mixing may be performed by a ball mill or jet mill, for example.

After the electrode mixture and the metal compound are sufficiently mixed, the mixed product is baked at a temperature of 300 to 700 °C, for example (primary baking step (step 6)). This primary baking step removes the ingredients other than the active material contained in the original electrode mixture (i.e., binder and conductive aid). If the processing temperature is too low, the ingredients other than the active material are not sufficiently removed. On the other hand, if the processing temperature is too high, this promotes aggregation of the active material. The processing temperature for the primary baking step is preferably not lower than 450 °C, more preferably not lower than 500 °C, and yet more preferably not lower than 550 °C. The processing temperature is preferably not higher than 650 °C.

The primary baking step is preferably performed in an environment containing oxygen. The primary baking step may be performed in an atmospheric environment, for example; if the recovered active material contains Ni, the environment preferably has a higher oxygen concentration than the atmospheric environment, and may have an oxygen concentration of 100 %. To sufficiently remove the ingredients other than the active material, it is preferable to hold the temperature at the processing temperature for not shorter than 1 hour. To reduce the remaining binder and other ingredients, the holding time at the processing temperature for the primary baking step is more preferably not shorter than 3 hours, and more preferably not shorter than 5 hours. On the other hand, if the holding time is too long, this decreases efficiency. The holding time for the primary baking step is preferably not longer than 12 hours, and more preferably not longer than 10 hours.

After completion of the primary baking step, the mixed product is crushed (crushing step (step S7)). Some portions of the mixed product after the primary baking step are aggregated; these portions are crushed to increase the surface area. Further, as crushing is performed where the binder and other ingredients adhering to the surface of the recovered active material have been removed by the primary baking step, the active material and metal compound may be mixed more uniformly. Although not limiting, the crushing may be performed by a ball mill or jet mill, for example.

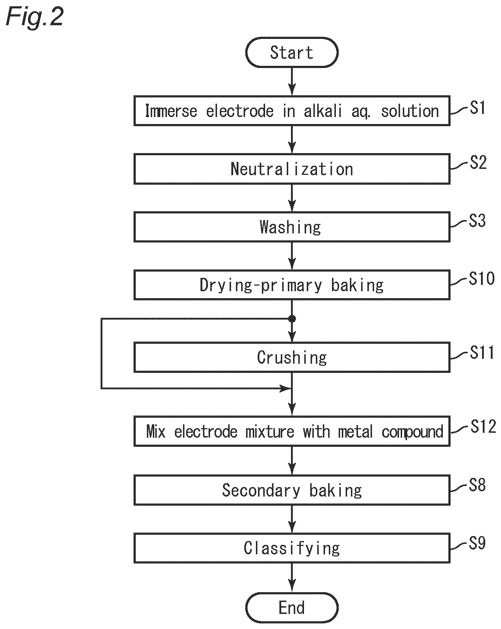

Alternatively, as in the second embodiment discussed further below, the processing temperature in the drying step for drying the electrode mixture (step S4) may be increased to the processing temperature for the primary baking step (step S6)) such that the drying of the electrode mixture and the removal of the binder and other ingredients adhering to the surface of the recovered active material may be performed in a single step (drying-primary baking step (step S10 in FIG. 2)).

Next, the mixed product after the crushing step is baked at a temperature not lower than the melting point of the metal compound and not higher than 1000 °C, for example (secondary baking step (step S8)). This secondary baking step causes the active material to be doped with the metal elements of the metal compound such that the composition of the active material returns to the appropriate state for recycling. If the processing temperature is too low, the metal elements are not sufficiently dispersed, and thus the composition of the active material is not returned to the appropriate state for recycling. On the other hand, if the processing temperature is too high, this promotes aggregation of the active material. The processing temperature for the secondary baking step is more preferably not lower than 800 °C, yet more preferably not lower than 850 °C, and is to be not higher than 950 °C. The processing temperature for the secondary baking step may be adjusted as appropriate depending on the type of the metal compound used (e.g., Li salt). For example, if the metal compound is lithium carbonate (with a melting point of 723 °C), the processing temperature is preferably not lower than 800 °C, a range higher than that melting point; if lithium hydroxide is used, its low melting point of 445 °C allows the processing temperature to be lower than the above-stated range.

In the case of an active material whose structure may be destroyed by baking at high temperature, such as LiNi_{0.8}Co_{0.15}Al_{0.05}O₂ or LiNi_{0.8}Co_{0.1}Mn_{0.1}O₂, it is preferable to perform the secondary baking step at a lower processing temperature using a compound with a low melting point such as lithium hydroxide. Examples of salts with a low melting point include lithium formate and lithium oxalate, which may be used alone or, prior to use, mixed with a salt with a high melting point such as lithium carbonate.

The secondary baking step is preferably performed in an environment containing oxygen. The secondary baking step may be performed in an atmospheric environment, for example; if the recovered active material contains Ni, the environment may have a higher oxygen concentration than the atmospheric environment, and may have an oxygen concentration of 100 %. To sufficiently disperse the metal elements, it is preferable to hold the temperature at the processing temperature for not shorter than 10 hours. The holding time at the processing temperature for the secondary baking step is more preferably not shorter than 12 hours, and yet more preferably not shorter than 15 hours. On the other hand, if the holding time is too long, this decreases efficiency. The holding time for the secondary baking step is preferably not longer than 48 hours, and more preferably not longer than 24 hours.

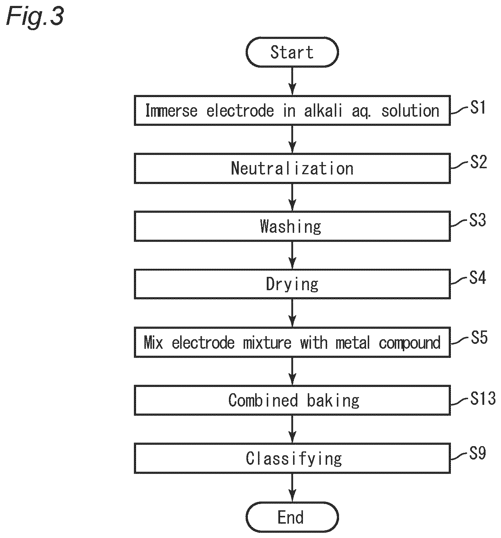

Alternatively, as in the third embodiment discussed further below, the processing temperature in the primary baking step for the mixed product of an electrode mixture and a metal compound (step S6) may be increased to the processing temperature for the secondary baking step (step S8) (e.g., not lower than the melting point of the metal compound and not higher than 1000 °C) such that the removal of the binder and other ingredients adhering to the surface of the recovered active material and the doping of the active material with the metal elements of the metal compound may be performed in a single step (combined baking step (step S13 in FIG. 3)).

Finally, particles of the mixed product after the secondary baking step are classified (step S9). For example, the product may be sieved to remove coarse particles. If necessary, the step of crushing the mixed product may be provided prior to the classifying.

These steps result in an electrode active material that can be reused. The electrode active material thus manufactured can be used as a material for an electrode of a secondary battery in the same manner as a new electrode active material.

### [Second Embodiment]

FIG. 2 is a flow chart of a method of manufacturing an electrode active material according to a second embodiment in the embodiments of the present invention. The present method of manufacturing an electrode active material is the same as that of the first embodiment (FIG. 1) except that steps S4 to steps S7 (i.e., the drying, mixing, primary baking and crushing steps) have been replaced by a drying-primary baking step (step S10), crushing step (step S11) and mixing step (step S12).

The drying-primary baking step (step S10) increases the processing temperature for the drying step of the first embodiment (step S4 (FIG. 1)) to the processing temperature for the primary baking step (step S6 (FIG. 1)) (e.g., 300 to 700 °C) to perform, in a single step, the drying of the electrode mixture and the removal of the binder and other ingredients adhering to the surface of the recovered active material.

During the drying-primary baking step, the processing temperature may be increased to the processing temperature for the primary baking step (e.g., 300 to 700 °C) in one go, or may first be kept at a drying temperature (e.g., lower than 300 °C) and then increased to the processing temperature for the primary baking step.

According to the present embodiment (i.e., second embodiment), the electrode mixture processed at the drying-primary baking step (step S10) is crushed (step S11) in the same manner as in the crushing step of the first embodiment (step S7 (FIG. 1)), and a metal compound is then added to the crushed electrode mixture and mixed together (step S12). It is to be understood that the crushing step (step S11) may be omitted.

### [Third Embodiment]

FIG. 3 is a flow chart of a method of manufacturing an electrode active material according to a third embodiment in the embodiments of the present invention. The present method of manufacturing an electrode active material is the same as that of the first embodiment (FIG. 1) except that steps S6 to S8 (i.e., primary baking, crushing and secondary baking steps) have been replaced by a combined baking step (step S13).

The combined baking step (step S13) increases the processing temperature for the primary baking step (step S6 (FIG. 1)) of the first embodiment to the processing temperature for the secondary baking step (step S8 (FIG. 1)) (e.g., not lower than the melting point of the metal compound and not higher than 1000 °C) to perform, in a single step, the removal of the binder and other ingredients adhering to the surface of the recovered active material and the doping of the active material with the metal elements of the metal compound. In the present embodiment (i.e., third embodiment), the crushing step between the first and secondary baking steps (step S7 (FIG. 1)) is omitted.

During the combined baking step, the processing temperature may be increased to the processing temperature for the secondary baking step (e.g., not lower than the melting point of the metal compound and not higher than 1000 °C) in one go, or may first be kept at the processing temperature for the primary baking step (e.g., 300 to 700 °C) and then increased to the processing temperature for the secondary baking step.

### [Secondary Battery and Method of Manufacturing Secondary Battery]

A secondary battery according to the embodiment of the present invention includes an electrode containing an electrode active material produced by the above-described method of manufacturing an electrode active material.

As mentioned above, an electrode active material produced by the above-described method of manufacturing an electrode active material may be used as a material for an electrode of a secondary battery in the same manner as a new electrode active material. As such, an electrode of a secondary battery according to the present embodiment may be produced by a common method. Specifically, for example, a binder, a conductive aid and a solvent may be added to the electrode active material to prepare an electrode mixture paste, which may be applied to a current collector and then dried to produce an electrode.

A method of manufacturing an electrode active material, a method of manufacturing a secondary battery and a secondary battery according to an embodiment of the present invention have been described.

According to the present embodiment, an electrode is immersed in an alkali aqueous solution to slightly dissolve the surface of the current collector to peel the electrode mixture from the current collector. If an electrode mixture is immersed in an alkali aqueous solution, even after a subsequent replacement with a neutral dispersion medium, the rate at which metal flows out of the active material is high. The method of manufacturing an electrode active material according to the present embodiment neutralizes the electrode mixture after immersion in the alkali aqueous solution to reduce the rate at which metal flows out of the active material. Thus, the present embodiment will prevent the crystal structure of the active material from changing during recovery and, through a recycling process, provide an electrode active material that can be reused and that provides good characteristics.

The method of manufacturing an electrode active material according to the present embodiment may be used regardless of the type of the binder for the electrode mixture. Further, no organic solvent may be used or the amount of organic solvent used may be reduced, thereby reducing environmental impact. Furthermore, the current collector left after the electrode mixture has been separated may be recycled as a resource.

A method of recycling an electrode active material has been described above that involves mixing an electrode mixture and a metal compound into a mixed product and performing a two-stage baking process (step S5 to S9). This method allows the recovered electrode active material and metal elements to efficiently react with each other. Further, no organic solvent is used or the amount of organic solvent used is reduced, thereby reducing environmental impact. Nevertheless, this recycling method is merely an illustrative example; a method including the steps of immersing the electrode in an alkali aqueous solution (step S1) and neutralizing the electrode mixture (step S2) may be combined with other recycling methods.

### EXAMPLES

Now, the present invention will be described more specifically with reference to examples. The present invention is not limited to these examples.

Tests were conducted where, from a spent secondary battery, an exhausted active material was recovered and recycled. The electrode active material recovered and recycled was LiNi_{0.5}Co_{0.2}Mn_{0.3}O₂. This represents the composition in the initial state; at the time of recovery from the spent secondary battery, the composition was Li*ₓ*Ni_{0.5}Co_{0.2}Mn_{0.3}O₂ (x<1, e.g., x=0.84), provided that the compositional changes due to the flow-out of transition metal elements are negligible,.

First, for each spent secondary battery, an electrode (i.e., positive electrode using polyvinylidene fluoride as a binder) was recovered therefrom and immersed in an alkali aqueous solution, for example, before the electrode mixture was peeled from the current collector, which was made of an aluminum foil. Table 1 shows the results of tests with different immersion conditions.

**[Table 1]**

| No. | Stripping solution | pH | Immersion time | Result |
|---|---|---|---|---|
| 1 | 0.7 M NaOH aq | 13.5-13.7 | 5 min | |
| 2 | 0.7 M KOH aq | 13.5-13.7 | 5 min | |
| 3 | NMP | - | 30 min | not peeled |
| 4 | 0.7 M LiOH aq | 13.5-13.7 | 30 min | some remained unpeeled |
| 5 | 0.6 M NaOH aq | 10.0 | 30 min | not peeled |
| 6 | 0.8 M NaOH aq | 15.0 | 5 min | current collector dissolved, disappeared |
| 7 | 0.7 M NaOH aq | 13.5-13.7 | 30 min | current collector dissolved, disappeared |

As shown in Table 1, if the electrode was immersed for 5 minutes in an aqueous solution of sodium hydroxide or an aqueous solution of potassium hydroxide with a pH of 13.5 to 13.7, the electrode mixture was peeled from the current collector. In test nos. 1 and 2, besides the immersion step, it was not necessary to perform any other process, such as applying a force using a spatula to scrape off the electrode mixture; the electrode mixture naturally peeled off in the stripping solution. Thus, the electrode mixture and current collector were easily separated and were recovered separately.

On the other hand, in test no. 3, which used an organic solvent (N-methyl-2-pyrrolidone (NMP)) in lieu of an alkali aqueous solution, the electrode mixture did not peel off even after immersion for 30 minutes.

If an electrode is to be fabricated using polyvinylidene fluoride as a binder for its electrode mixture, NMP is typically used as a solvent for turning the mixture into a paint; as such, NMP is typically used as a solvent for peeling an electrode mixture from a current collector and, in fact, for an unused electrode, the electrode mixture can be easily peeled off using NMP. However, in the case of a used electrode, as shown in the above-discussed result, it is very difficult to peel the electrode mixture from the current collector using NMP unless another process is performed such as applying a force to scrape off the electrode mixture. No clear reason therefor is available; it is estimated that chemical reactions accompanying charge/discharge of a battery causes transformation of the joining portions of the current collector (i.e., aluminum foil) and polyvinylidene fluoride, resulting in a composition that does not dissolve in NMP. In contrast, the method of the present invention allows the electrode mixture to be easily peeled from the current collector and recovered.

In test no. 4, where the alkali aqueous solution used was an aqueous solution of lithium hydroxide, some mixture remained unpeeled even after immersion for 30 minutes. In test no. 5, with such a concentration of sodium hydroxide as to provide a pH of 10.0, the electrode mixture did not peel off even after immersion for 30 minutes. In test no. 6, with a pH of 15.0, all the aluminum of the current collector dissolved after immersion for 5 minutes. Further, as will be apparent from test no. 7, even with a pH of 13.5 to 13.7, all the aluminum of the current collector dissolved after immersion for 30 minutes.

The above-discussed results show that the stripping solution is preferably an alkali aqueous solution, and particularly preferably an aqueous solution of sodium hydroxide or an aqueous solution of potassium hydroxide; the pH is preferably about 13.0 to 14.0; and the immersion time is preferably about 1 to 10 minutes.

After an electrode mixture was peeled from an aluminum-foil current collector, the alkali aqueous solution was removed through decantation. While the electrode mixture was being dispersed in water and stirred, 1 M of an aqueous solution of sulfuric acid was added until the pH became 7.0 or lower. The resulting product, with the pH at 7.0 or lower, was held in this state for 1 minute before the electrode mixture was separated from the dispersion through filtering. Thereafter, the stirring in water and filtering were repeated twice to wash the electrode mixture. The electrode mixture as washed was dried at 60 °C for 5 hours.

The amount of Li in the electrode mixture as dried was measured, and 6.2 parts by mass of lithium carbonate was added to 100 parts by mass of the electrode mixture such that *x* in Li*ₓ*Ni_{0.5}Co_{0.2}Mn_{0.3}O₂ became 1. In other words, such an amount of lithium carbonate was added that, when the entire amount had reacted with the active material in the electrode mixture during the subsequent baking process, the molar ratio x of the Li in the active material would be 1. The resulting product was mixed in a ball mill for 0.5 hours. Primary baking was performed where this mixed product was baked in an atmospheric environment at 600 °C for 5 hours. The mixed product after primary baking was crushed in a ball mill for 0.5 hours. Secondary baking was performed where the crushed mixed product was baked in an atmospheric environment at 900 °C for 15 hours. The mixed product after secondary baking was sieved to remove coarse particles of not less than 100 µm, which resulted in an electrode active material.

To investigate the effects of intake of oxygen during the secondary baking step, two scenarios of secondary baking were performed: a crucible with a mixed product placed therein was closed with a lid, i.e., (B1) "with crucible lid"; and a crucible with a mixed product placed therein was not closed with a lid but opened, i.e., (B2) "without crucible lid", thus producing two electrode active materials from different baking environments (B1 and B2).

From each electrode active material produced, an electrode (i.e., electrode sheet) was fabricated. For comparison, the following electrode active materials were produced: an electrode active material (A) was produced in the same manner as electrode active material (B2) except that the baking step was constituted only by primary baking, i.e., the secondary baking step (step S8) was omitted; an electrode active material was produced in the same manner as electrode active material (B2) except that no lithium carbonate was added to the recovered active material, i.e., step S5 was omitted (hereinafter referred to as "baked product"); an electrode active material was produced in the same manner as electrode active material (B2) except that only alkali immersion, neutralization, washing and drying (steps S1 to S4) were performed, i.e., the addition of lithium carbonate and baking (steps S5 to S8) were omitted (hereinafter referred to as "neutralized product"); and an electrode active material was produced in the same manner as the neutralized product except that the neutralizing step (step S2) was also omitted (hereinafter referred to as "alkali-treated product"). These various electrode active materials were used to fabricate electrode sheets.

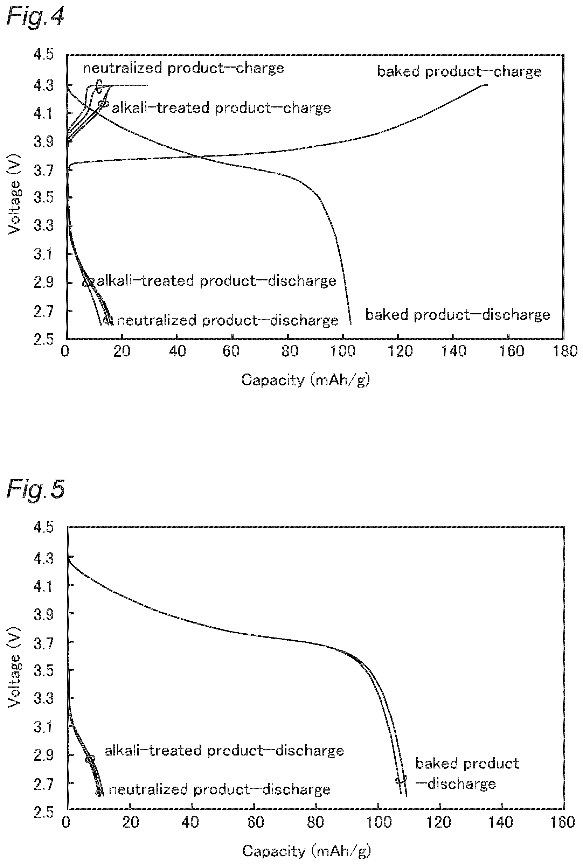

From each of the above-described electrode active materials, two electrode sheets were fabricated and their charge/discharge curves were measured. FIG. 4 shows charge/discharge curves, during the first round of charge/discharge, of the electrode sheets from the baked product, neutralized product and alkali-treated product (at a discharge rate of 0.05 C). FIG. 5 shows discharge curves for a discharge rate of 0.02 C. FIGS. 4 and 5 demonstrate that the alkali-treated product and the neutralized product did not operate even at very low rates, whereas the baked product was active and usable even without an adjustment to the ratio of the amount of Li.

Next, a comparison was made between the electrode active material (A) that had been subjected to primary baking only and electrode active materials (B1 and B2) subjected to primary baking and secondary baking.

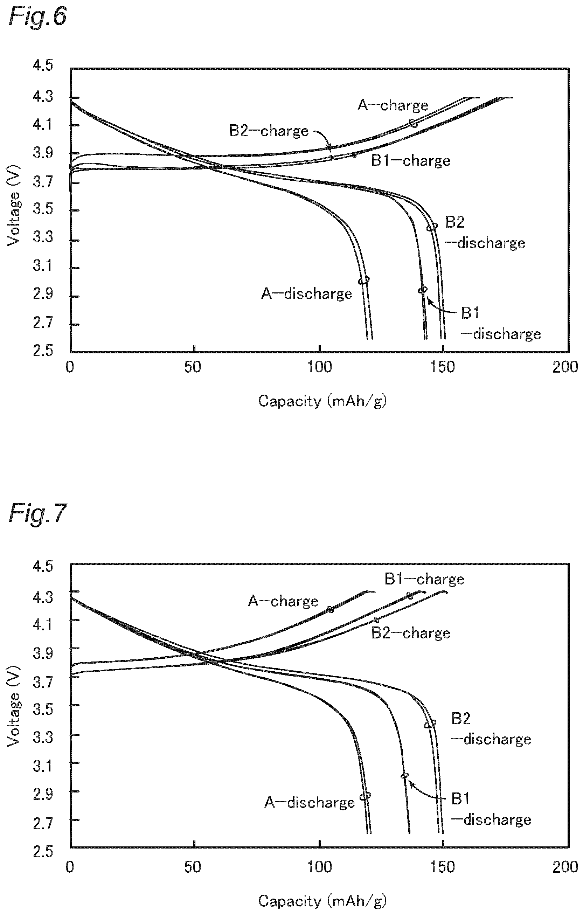

In these tests, too, from each electrode active material, two electrode sheets were fabricated and their charge/discharge curves were measured. FIG. 6 shows charge/discharge curves of the electrode sheets during the first round of charge/discharge. FIG. 7 shows charge/discharge curves of the electrode sheets during the second round of charge/discharge. Table 2 shows efficiencies during the first round of charge/discharge (i.e., ratios of the discharge capacity for the first round to the charge capacity for the first round), while Table 3 shows efficiencies during the second round of charge/discharge (i.e., ratios of the discharge capacity for the second round to the charge capacity for the second round).

**[Table 2]**

| Electrode active material | | Charge for first round mAh/g | Discharge for first round mAh/g | Efficiency for first round |
|---|---|---|---|---|
| A | Primary baking only | 164.4 | 121.5 | 73.9% |
| | | 161.5 | 119.6 | 7 4.0% |
| B1 | Primary baking + secondary baking, with crucible lid | 176.7 | 143.5 | 81.2% |
| | | 174.6 | 142.8 | 81.8% |
| B2 | Primary baking + secondary baking, without crucible lid | 177.8 | 150.7 | 84.8% |
| | | 177.6 | 149.2 | 84.0% |

**[Table 3]**

| Electrode active material | | Charge for second round mAh/g | Discharge for second round mAh/g | Efficiency for second round |
|---|---|---|---|---|
| A | Primary baking only | 122.2 | 120.6 | 98.7% |
| | | 120.4 | 119.4 | 99.1% |
| B1 | Primary baking + secondary baking, with crucible lid | 142.3 | 136.4 | 95.8% |
| | | 142.7 | 136.3 | 95.5% |
| B2 | Primary baking + secondary baking, without crucible lid | 151.1 | 148.1 | 98.0% |
| | | 151.2 | 149.5 | 98.9% |

FIG. 6 and Table 2 show that performing secondary baking in addition to primary baking significantly improves the efficiency for the first round. Further, FIG. 6 and Table 3 show that the efficiency for the second round is higher if a crucible without a lid is used than with a lid. This shows that it is preferable to perform the baking steps in an environment with oxygen present.

Further, for comparison, electrode active materials (C) and (D) were produced in the same manner as electrode active materials (A) and (B2) except that the neutralizing step (step S2) was omitted, electrode sheets were fabricated from those materials in the same manner as described above, and the effects of the neutralizing process on the characteristics of the electrode active materials were determined. The charge/discharge curves of the electrodes were measured and the discharge capacity for the first round of charge/discharge and the associated efficiency (i.e., ratio of the discharge capacity for the first round to the charge capacity for the first round were calculated); the measurements for the electrodes are shown in Table 4, the measurements being values relative to the values for electrode active materials (A) and (B2) subjected to the neutralizing process, which are represented by "100".

**[Table 4]**

| Electrod active material | | Discharge for first round | Efficiency for first round |
|---|---|---|---|
| A | Primary baking only | 100% | 100% |
| C | | 76% | 84% |
| B2 | Primary baking + secondary baking, without crucible lid | 100% | 100% |
| D | | 97% | 98% |

Compared with electrode active materials (C) and (D), which had not been subjected to the neutralizing process after peeling of the electrode mixture, electrode active materials (A) and (B2) subjected to the neutralizing process had better paint dispersion and preservation properties during the preparation of electrode mixture paste, facilitating fabrication of an electrode. Further, materials (A) and (B2) had improved discharge capacity and charge/discharge efficiency, providing good properties as recycled active materials.

These differences occurred presumably because the neutralizing process decreased the amount of Li that flowed out of the active material, resulting in different surface structures and/or surface physical properties of active material particles.

Although an embodiment of the present invention has been described, the present invention is not limited to the above-described embodiment, and various modifications are possible within the scope of the invention.

## Claims

1. A method of manufacturing an electrode active material by recycling an exhausted active material contained in an electrode of a spent secondary battery such that the resulting active material can be reused, the electrode including a current collector and an electrode mixture formed above the current collector and containing the active material, the method comprising:
immersing the electrode in an alkali aqueous solution to peel the electrode mixture from the current collector; and
neutralizing the peeled electrode mixture.

2. The method of manufacturing an electrode active material according to claim 1, further comprising:
mixing the electrode mixture and a metal compound into a mixed product;
a primary baking step, the primary baking step baking the mixed product at a temperature of 300 to 700 °C;
a crushing step, the crushing step crushing the mixed product after the primary baking step; and
a secondary baking step, the secondary baking step baking the mixed product after the crushing step at a temperature not lower than a melting point of the metal compound and not higher than 1000 °C.

3. The method of manufacturing an electrode active material according to claim 1, further comprising:
a drying-primary baking step, the drying-primary baking step baking the electrode mixture at a temperature of 300 to 700 °C;
mixing the electrode mixture after the drying-primary baking step and a metal compound into a mixed product; and
a secondary baking step, the secondary baking step baking the mixed product at a temperature not lower than a melting point of the metal compound and not higher than 1000 °C.

4. The method of manufacturing an electrode active material according to claim 1, further comprising:
mixing the electrode mixture and a metal compound into a mixed product;
a combined baking step, the combined baking step baking the mixed product at a temperature not lower than a melting point of the metal compound and not higher than 1000 °C.

5. The method of manufacturing an electrode active material according to claim 1, wherein a pH of the alkali aqueous solution is not lower than 12.0.

6. The method of manufacturing an electrode active material according to claim 1, wherein a time for which the immersion in the alkali aqueous solution occurs is 1 to 10 minutes.

7. The method of manufacturing an electrode active material according to claim 1, wherein the alkali aqueous solution is an aqueous solution of sodium hydroxide or an aqueous solution of potassium hydroxide.

8. The method of manufacturing an electrode active material according to claim 1, wherein the electrode active material is a lithium composite oxide.

9. A method of manufacturing a secondary battery comprising:
manufacturing an electrode using an electrode active material manufactured by the method of manufacturing an electrode active material according to any one of claims 1 to 8.

10. A secondary battery comprising:
an electrode containing an electrode active material manufactured by the method of manufacturing an electrode active material according to any one of claims 1 to 8.
